# EUROPÄISCHE PATENTSCHRIFT

(11) **EP 2 556 971 B1**
(45) Veröffentlichungstag und Bekanntmachung des Hinweises auf die Patenterteilung: **19.04.2017**
(21) Anmeldenummer: 12176793.3
(22) Anmeldetag: 18.07.2012
(51) Int. Cl.: B60C 11/03, B60C 11/13

(54) **Fahrzeugluftreifen**
Pneumatic tyres for a vehicle
Pneus de véhicule

(30) Priorität: 12.08.2011 DE 102011052684
(43) Veröffentlichungstag der Anmeldung: 13.02.2013
(73) Patentinhaber: Continental Reifen Deutschland GmbH, 30165 Hannover (DE)
(72) Erfinder: Rittweger, Stefan, 30163 Hannover (DE)
(74) Vertreter: Finger, Karsten

(56) Entgegenhaltungen:
- EP-A1- 0 455 925
- EP-A1- 0 503 405
- EP-A1- 0 609 194

## Beschreibung

Die Erfindung betrifft ein Laufstreifenprofil eines Fahrzeugluftreifens mit einer in axialer Richtung A zentral positionierten Umfangsrille und mit beiderseits dieser Umfangsrille jeweils wenigstens zwei in axialer Richtung A nebeneinander angeordneten und jeweils durch eine Umfangsrille von einander beabstandeten Profilblockreihen, welche jeweils aus in Umfangsrichtung U des Fahrzeugreifens hintereinander angeordneten und durch Schrägrillen von einander beabstandeten Profilblockelementen getrennt sind, wobei jedes Profilblockelement einer Profilblockreihe in Umfangsrichtung sowohl in die erste als auch in die zweite der beiden Umfangsorientierungen jeweils durch eine Flanke begrenzt wird, die jeweils die zum Profilblockelement gerichtete Rillenwand der zur jeweiligen Umfangsorientierung das Profilblockelement begrenzende Schrägrille bildet, wobei die Schrägrillen jeweils in axialer Richtung A in beide die jeweilige Profilblockreihe in axialer Richtung A begrenzenden Umfangsrillen mündet und entlang ihrer axialen Erstreckung in der von der zentralen Umfangsrille wegweisenden axialen Richtung A durch die Profilblockreihe hinweg unter Einschluss eines Neigungswinkels α mit 80°>α > 10° zur axialen Richtung A in die erste und somit in die gleiche Umfangsorientierung geneigt verlaufend ausgebildet sind.

Derartige Fahrzeugluftreifen sind bekannt. Es sind Fahrzeugluftreifen bekannt mit mehreren axial nebeneinander angeordneten Profilblockreihen oder Profilrippen. Eine schmale Ausbildung derartiger Profilblockreihen oder -rippen ermöglicht dabei eine erhöhte Flexibilität der Profilrippe bzw. der Profilblockelemente der Profilblockreihe um Biegelinien, welche in Umfangsrichtung gerichtet sind. Die hierdurch bedingte Gelenkwirkung erleichtert die Abplattung des Profils beim Durchlauf des Reifenlatsches, wodurch Komforteigenschaften und Rollwiderstand begünstigt werden. Aufgrund der mit der verbesserten Gelenkwirkung auch einhergehenden Kippgefahr der Profilblockelemente bzw. der -rippen wird jedoch der Kontakt mit der Straße bei Handlingmanövern negativ beeinflusst. Sie Handlingeigenschaften werden beeinträchtigt. Daher werden üblicherweise zur Sicherstellung guter Handlingeigenschaften die Rippen bzw. Profilblockreihen mit entsprechend größerer Breite ausgebildet unter Inkaufnahme der hierdurch bedingten Nachteile für Komfort und Rollwiderstand.

Bei derartigen Fahrzeugluftreifen mit Block- oder Rippenprofil wird über die Umfangsrillen und bei Blockprofilen zusätzlich über Quer- bzw. Schrägrillen die Ableitung des Wassers bewirkt.

Es sind auch Fahrzeugluftreifen mit sogenannten V-Profilen bekannt, bei welchen die V-förmige Struktur von erhabenen Profilelementen und von diese trennenden Rillen gerade bei schmalem Reifen eine besonders gute Ableitung des Wassers nach außen hin ermöglicht. Die sich dabei über einen relativ breiten axialen Erstreckungsabschnitt erstreckenden radial erhabenen Profilelemente könne jedoch eine zum Teil deutliche Geräuscherhöhung bewirken.

Aus der EP 0 503 405 A1 ist ein Laufstreifenprofil eines Fahrzeugluftreifens gemäß den Merkmalen des Oberbegriffs des Anspruchs 1 bekannt.

Aus der EP 0 455 925 A1 sowie aus der EP 0 609 194 A1 ist die Ausbildung von Laufstreifenprofilen mit Verbindungsstegen bekannt.

Der Erfindung liegt die Aufgabe zugrunde, mit einfachen Mitteln ein Laufstreifenprofil eines Fahrzeugluftreifens zu schaffen, bei dem guter Rollwiderstand und gute Komforteigenschaften bei guten Handling- und Geräuscheigenschaften ohne Aquaplaningnachteile ermöglicht werden.

Die Aufgabe wird erfindungsgemäß durch die Ausbildung eines Laufstreifenprofils eines Fahrzeugluftreifens mit einer in axialer Richtung A zentral positionierten Umfangsrille und mit beiderseits dieser Umfangsrille jeweils wenigstens zwei in axialer Richtung A nebeneinander angeordneten und jeweils durch eine Umfangsrille von einander beabstandeten Profilblockreihen, welche jeweils aus in Umfangsrichtung U des Fahrzeugreifens hintereinander angeordneten und durch Schrägrillen von einander beabstandeten Profilblockelementen getrennt sind, wobei jedes Profilblockelement einer Profilblockreihe in Umfangsrichtung sowohl in die erste als auch in die zweite der beiden Umfangsorientierungen jeweils durch eine Flanke begrenzt wird, die jeweils die zum Profilblockelement gerichtete Rillenwand der zur jeweiligen Umfangsorientierung das Profilblockelement begrenzende Schrägrille bildet, wobei die Schrägrillen jeweils in axialer Richtung A in beide die jeweilige Profilblockreihe in axialer Richtung A begrenzenden Umfangsrillen mündet und entlang ihrer axialen Erstreckung in der von der zentralen Umfangsrille wegweisenden axialen Richtung A durch die Profilblockreihe hinweg unter Einschluss eines Neigungswinkels α mit 80°>α > 10° zur axialen Richtung A in die erste und somit in die gleiche Umfangsorientierung geneigt verlaufend ausgebildet sind, gemäß den Merkmalen von Anspruch 1 gelöst, bei dem die die Profilblockelemente der Profilblockreihen in Umfangsrichtung U jeweils mit ihrer einen in gleicher Orientierung hin begrenzende Flanke in axialer Richtung A zur zentralen Umfangsille hin durch die die jeweilige Profilblockreihe begrenzende Umfangsrille hindurch bis zur benachbarten Profilblockreihe erstreckt als eine Flanke eines das Profilblockelement mit einem Profilblockelement der benachbarten Profilblockreihe durch die Umfangsrille hindurch verbindenden Steges ausgebildet ist, wobei der Steg das Profilblockelement der benachbarten Profilblockreihe jeweils mit in Umfangsrichtung U gemessenem Abstand zu den das Profilblockelement der benachbarten Profilblockreihe begrenzenden Schrägrillen anbindet.

Durch diese Ausbildung wird das Laufstreifenprofil mit einer Profilblockreihenausbildung ermöglicht. Durch die Verlängerung der jeweils zur gleichen in Umfangsorientierung gerichteten Seite das Profilblockelement begrenzenden Flanke in axialer Richtung zur zentralen Umfangsrille hin bis zur nächsten Profilblockreihe, wobei die Flanke im Erstreckungsbereich durch die die benachbarte Profilblockreihe vom Profilblockelement trennenden Umfangsrille die Flanke eines das Profilblockelement mit einem Profilblockelement der benachbarten Profilblockreihe verbindenden Steges bildet, und durch die gleiche orientierte Neigung der Schrägrillen bilden die Stege, die Profilblockelemente und die Schrägrillen beiderseits der zentralen Umfangsrille eine V-förmige Struktur mit den günstigen Wasserableitungseigenschaften eines V-Profils. Die Beibehaltung der Blockprofilstruktur des Laufstreifensprofils ermöglicht gegenüber üblichen V-Profilen die Ausbildung relativ kleiner Quererstreckungsanteilen der Profilblockelemente und hierdurch die Beibehaltung guter Geräuschbildungseigenschaften. Die Profilblockelemente der Profilblockreihen können relativ schmal ausgebildet werden, wodurch eine verbesserte Gelenkwirkung der Profilblockelemente bewirkt wird und ein verbessertes Abplatten der Profilblockelemente beim Durchlaufen des Reifenlatsches ermöglicht werden kann. Hierdurch können Komfort und Rollwiderstand besonders günstig ausgebildet werden. Die verbindenden Stege mit ihren schräg verlaufenden Flanken bewirken nicht nur ein verbessertes Ableiten des Wassers zur Seite hin, sondern bewirken eine Anbindung der Profilblockelemente gerade im Bereich ihrer zwischen Schrägrille und Umfangsrille eingeschlossenen spitzen, zum Einknicken neigenden Profilblockelementecken, wodurch das Einknicken verhindert und die Handlingeigenschaften verbessert werden können. Somit ist unter Nutzung des bekannten Blockreihenprofils mit dessen Vorteilen hinsichtlich der Geräuschentstehung eine einem V-Profil ähnliche Wasserableitung und den damit verbundenen verbesserten Wasserableitungseigenschaften auch bei zur Erzielung guter Rollwiderstands- und Komforteigenschaften schmal ausgebildeten Blockprofilreihen bei dennoch guten Handlingeigenschaften möglich.

Besonders vorteilhaft ist die Ausbildung eines Fahrzeugluftreifens gemäß den Merkmalen von Anspruch 2, wobei die die Profilblockelemente der Profilblockreihen in Umfangsrichtung U jeweils mit ihrer zur zweiten Umfangsorientierung gerichteten Seite hin begrenzenden Flanke in axialer Richtung A zur zentralen Umfangsille hin durch die die jeweilige Profilblockreihe begrenzende Umfangsrille hindurch bis zur benachbarten Profilblockreihe erstreckt als eine Flanke eines das Profilblockelement mit einem Profilblockelement der benachbarten Profilblockreihe durch die Umfangsrille hindurch verbindenden Steges ausgebildet ist. Hierdurch wird in einfacher Weise sehr zuverlässig eine hohe Stabilisierung der Profilblockelemente der Profilblockreihen ermöglicht.

Besonders vorteilhaft ist die Ausbildung eines Fahrzeugluftreifens gemäß den Merkmalen von Anspruch 3, wobei die das Profilblockelement und den Steg begrenzende Flanke über ihre gesamte axiale Erstreckung in der radial äußeren Oberfläche geradlinig ausgebildet ist.

Hierdurch kann der Entstehung von unerwünschten Verwirbelungen des Wassers entgegengewirkt und gutes Aquaplaningverhalten gefördert werden.

Besonders vorteilhaft ist die Ausbildung eines Fahrzeugluftreifens gemäß den Merkmalen von Anspruch 4, wobei die senkrecht zur Erstreckungsrichtung der Flanke durch die Umfangsrille hindurch gemessene maximale Breite b des Steges in der den Steg nach radial außen begrenzenden Oberfläche mit (1/5)B ≤b≤(1/2) B ausgebildet ist, wobei B die in axialer Richtung A des Reifens gemessene maximale Breite der Profilblockreihe in der radial äußeren Oberfläche bildet. Hierdurch kann bei geringem Platzbedarf für die Ausbildung des Steges eine hohe stabilisierende Wirkung sichergestellt werden.

Besonders vorteilhaft ist die Ausbildung eines Fahrzeugluftreifens gemäß den Merkmalen von Anspruch 5, wobei die senkrecht zur Erstreckungsrichtung der Flanke durch die Umfangsrille hindurch gemessene maximale Breite b des Steges in der den Steg nach radial außen begrenzenden Oberfläche mit 5mm ≤b≤10mm ausgebildet ist.

Besonders vorteilhaft ist die Ausbildung eines Fahrzeugluftreifens gemäß den Merkmalen von Anspruch 6, wobei der Steg mit einer in radialer Richtung R ausgehend von dem die Umfangsrille nach radial innen begrenzenden Rillengrund nach außen gemessenen Höhe h mit (1/2)P_{T}≤ h ≤P_{T} ausgebildet ist, wobei P_{T} die in radialer Richtung R in der Umfangsrille gemessene Profiltiefe bildet. Auf diese Weise kann hohe Stabilität bei guten Aquaplaningeigenschaften einfach sichergestellt werden.

Besonders vorteilhaft ist die Ausbildung eines Fahrzeugluftreifens gemäß den Merkmalen von Anspruch 7, wobei der Neigungswinkels α mit 45°≤α≤ 70° - insbesondere mit α =60° - ausgebildet ist.

Besonders vorteilhaft ist die Ausbildung eines Fahrzeugluftreifens gemäß den Merkmalen von Anspruch 8, wobei die Breite B₂ der Schrägrille längs ihrer Erstreckung in der radial äußeren Oberfläche jeweils mit B₂≤ B₁ ausgebildet ist, wobei B₁ die Breite der Umfangsrille längs ihrer Erstreckung in Umfangsrichtung in der radial äußeren Oberfläche bildet, in welche die Schrägrille in axialer Richtung A zur zentralen Umfangsrille hin mündet. Hierdurch kann die Abstrahlung von Geräuschen reduziert werden.

Besonders vorteilhaft ist die Ausbildung eines Fahrzeugluftreifens gemäß den Merkmalen von Anspruch 9, wobei die Breite B₁ der Umfangsrille längs ihrer Erstreckung in Umfangsrichtung in der radial äußeren Oberfläche jeweils mit 5mm ≤ B₁≤12mm ausgebildet ist.

Besonders vorteilhaft ist die Ausbildung eines Fahrzeugluftreifens gemäß den Merkmalen von Anspruch 10, wobei die Breite B₂ der Schrägrille längs ihrer Erstreckung in der radial äußeren Oberfläche jeweils mit 4mm ≤ B₂≤6mm ausgebildet ist. Hierdurch kann bei guter Wasserableitung die Abstrahlung von Geräuschen auf geringem Niveau eingestellt werden.

Die Erfindung wird im Folgenden an Hand der in den Figuren 1 bis 6 dargestellten Ausführungsbeispiele näher erläutert. Hierin zeigen
- Fig. 1: eine Draufsicht auf das Laufstreifenprofil eines Fahrzeugreifens für Personenkraftwagen,
- Fig. 2: Schnittdarstellung des Laufstreifenprofils gemäß Schnitt II-II von Fig.1,
- Fig. 3: Schnittdarstellung des Laufstreifenprofils gemäß Schnitt III-III von Fig.1,
- Fig. 4: Laufstreifenprofil von Fig. 1 in alternativer Ausbildung,
- Fig. 5: Schnittdarstellung des Laufstreifenprofils gemäß Schnitt V-V von Fig.4 und
- Fig. 6: Schnittdarstellung des Laufstreifenprofils gemäß Schnitt VI-VI von Fig.4.

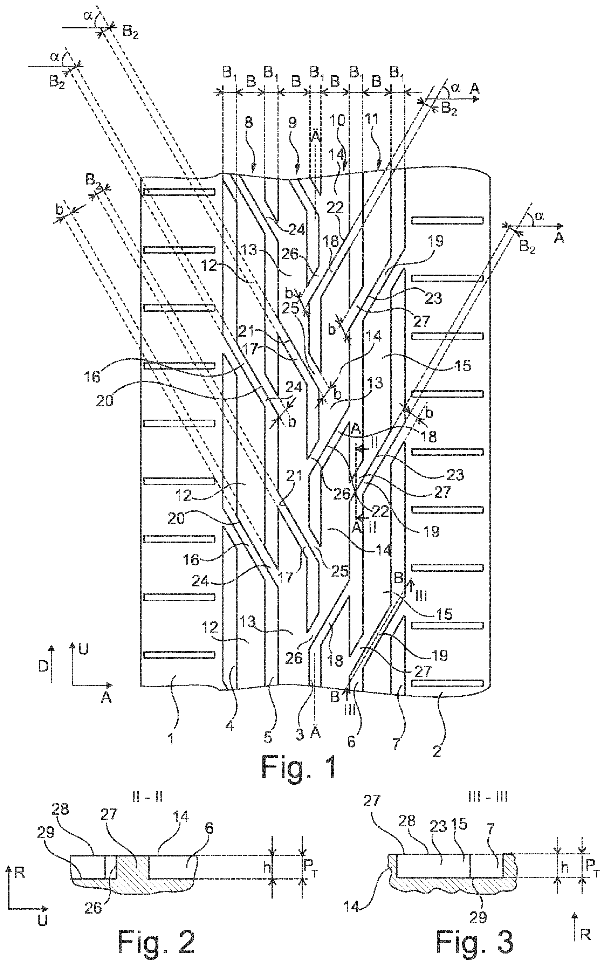

Figuren 1 bis 3 zeigen ein Laufstreifenprofil eines Pkw-Reifens radialer Bauart, bei welchem in bekannter Weise auf der einen Reifenschulter ein Schulterprofilband 1 bekannter Art und auf der anderen Reifenschulter ein Schulterprofilband 2 bekannter Art ausgebildet ist, welche sich jeweils in Umfangsrichtung U des Fahrzeugluftreifens über den gesamten Umfang des Fahrzeugluftreifens erstrecken. Die Schulterprofilbänder 1 und 2 sind beispielsweise -wie in Fig. 1 dargestellt - als Umfangsrippen bekannter Art ausgebildet. In anderer - nicht dargestellter - Ausführung sind die Schulterprofilbänder 1 und 2 jeweils Profilblockreihen bekannter Art ausgebildet. Die Bodenaufstandsbreite des Fahrzeugluftreifens im Betriebszustand des Fahrzeugluftreifens auf der Felge erstreckt sich in bekannter Weise in axialer Richtung A des Fahrzeugluftreifens aus dem axialen Erstreckungsbereich des Schulterprofilbandes 1 bis in den axialen Erstreckungsbereich des Schulterprofilbandes 2 hinein.

Zwischen den beiden Schulterprofilbändern 1 und 2 ist ein mittlerer Profilbandbereich mit den Profilblockreihen 8, 9, 10 und 11 ausgebildet. Die Profilblockreihe 8 ist in axialer Richtung A von dem Schulterprofilband 1 durch eine über den Umfang des Fahrzeugluftreifens erstreckte und in Umfangsrichtung U ausgerichtete Umfangsrille 4 bekannter Art getrennt ausgebildet. Die Profilblockreihe 9 und die Profilblockreihe 8 sind in axialer Richtung A in bekannter Weise durch eine über den Umfang des Fahrzeugluftreifens erstreckte und in Umfangsrichtung U ausgerichtete Umfangsrille 5 voneinander beabstandet. Die Profilblockreihe 9 und die Profilblockreihe 10 sind in axialer Richtung A durch eine zentrale Umfangsrille 3, welche sich über den Umfang des Fahrzeugluftreifens erstreckt und in Umfangsrichtung U ausgerichtet ist, voneinander beabstandet. Die Profilblockreihe 10 und die Profilblockreihe 11 sind in bekannter Weise in axialer Richtung A durch eine über den Umfang des Fahrzeugluftreifens erstreckte und in Umfangsrichtung U ausgerichtete Umfangsrille 6 voneinander beabstandet. Die Profilblockreihe 11 und das Schulterprofilband 2 sind in bekannter Weise in axialer Richtung A durch eine über den Umfang des Fahrzeugluftreifens erstreckte und in Umfangsrichtung U ausgerichtete Umfangsrille 7 voneinander beabstandet.

Im dargestellten Ausführungsbeispiel ist die Äquatorebene Ä-Ä axial mittig in der Umfangsrille 3 ausgebildet.

Die Profilblockreihe 11 ist in bekannter Weise aus über den Umfang des Fahrzeugluftreifens verteilten, in Umfangsrichtung U hintereinander angeordneten und jeweils durch eine Schrägrille 19 voneinander beabstandeten Profilblockelementen 15 ausgebildet. Die Profilblockreihe 10 ist aus über den Umfang des Fahrzeugluftreifens verteilten, in Umfangsrichtung U hintereinander angeordneten und jeweils durch eine Schrägrille 18 voneinander beabstandeten Profilblockelementen 14 ausgebildet. Die Profilblockreihe 9 ist aus über den Umfang des Fahrzeugluftreifens verteilten, in Umfangsrichtung U hintereinander angeordneten und jeweils durch eine Schrägrille 17 voneinander beabstandeten Profilblockelementen 13 ausgebildet. Die Profilblockreihe 8 ist aus über den Umfang des Fahrzeugluftreifens verteilten, in Umfangsrichtung U hintereinander angeordneten und jeweils durch eine Schrägrille 16 voneinander beabstandeten Profilblockelementen 12 ausgebildet.

Die Schrägrillen 16, 17, 18 und 19 sind jeweils geradlinig erstreckt und unter einem Neigungswinkel α zur axialen Richtung A geneigt verlaufend ausgebildet. Die Schrägrillen 18 der Profilblockreihe 10 erstrecken sich dabei ausgehend von der Umfangsrille 3 bis in die Umfangsrille 6 hinein. Die Schrägrillen 19 erstrecken sich ausgehend von der Umfangsrille 6 bis in die Umfangsrille 7 hinein. Die Schrägrillen 17 erstrecken sich ausgehend von der zentralen Umfangsrille 3 bis in die Umfangsrille 5 hinein. Die Schrägrillen 16 erstrecken sich ausgehend von der Umfangsrille 5 bis in die Umfangsrille 4 hinein. Die Schrägrillen 18 und 19 sind dabei längs ihrer axialen Erstreckung in axialer Richtung A von der zentralen Umfangsrille 3 zur Schulterrippe 2 hin geneigt verlaufend mit einer konstanten Umfangsrichtungskomponente in der in Fig.1 mit einem nach oben gerichteten Pfeil dargestellten Umfangsorientierungsrichtung D ausgebildet. Ebenso sind die Schrägrillen 17 und 16 längs ihrer axialen Erstreckung in axialer Richtung A ausgehend von der zentralen Umfangsrille 3 in Richtung zum Schulterband 1 hin geneigt verlaufend mit einer konstanten Richtungskomponente in Umfangsorientierungsrichtung D ausgebildet.

Die Profilblockelemente 12, 13, 14 und 15 sind in radialer Richtung R nach außen durch eine radial äußere Oberfläche 28, welche die Straßenkontaktoberfläche bildet, begrenzt ausgebildet. Die Umfangsrillen 4, 5, 6 und 7 sowie die Schrägrillen 16, 17, 18 und 19 sind in radialer Richtung R nach innen hin jeweils durch einen Rillengrund 29 begrenzt.

Die Profilblockelemente 12 der Profilblockreihe 8 sind in Umfangsrichtung U jeweils zu den beiden das jeweilige Profilblockelement 12 hin begrenzenden Schrägrillen 16 hin durch eine Profilblockelementflanke begrenzt, welche jeweils die zum Profilblockelement 12 hin weisende Rillenwand der jeweiligen Schrägrille 16 bilden. Die in der Umfangsorientierungsrichtung D dem jeweiligen Profilblockelement 12 in Umfangsrichtung U vorgeordnete Profilblockelementflanke ist in Fig.1 als Flanke 20 bezeichnet.

Die Profilblockelemente 13 der Profilblockreihe 9 sind in Umfangsrichtung U des Fahrzeugluftreifens jeweils zu den beiden das jeweilige Profilblockelement 13 hin begrenzenden Schrägrillen 17 durch eine Profilblockelementflanke begrenzt, welche jeweils die zum Profilblockelement 13 hin weisende Rillenwand der Schrägrille 17 bildet. Die in Umfangsrichtung U in der Umfangsorientierungsrichtung D dem jeweiligen Profilblockelement 13 vorgeordnete Profilblockelementflanke ist in Fig. 1 als Flanke 21 bezeichnet.

Die Profilblockelemente 14 der Profilblockreihe 10 sind in Umfangsrichtung U des Fahrzeugluftreifens jeweils zu den beiden das jeweilige Profilblockelement 14 hin begrenzenden Schrägrillen 18 durch eine Profilblockelementflanke begrenzt, welche jeweils die zum Profilblockelement 14 hin weisende Rillenwand der Schrägrille 18 bildet. Die in Umfangsrichtung U in der Umfangsorientierungsrichtung D dem jeweiligen Profilblockelement 14 vorgeordnete Profilblockelementflanke ist in Fig. 1 als Flanke 22 bezeichnet.

Die Profilblockelemente 15 der Profilblockreihe 11 sind in Umfangsrichtung U des Fahrzeugluftreifens jeweils zu den beiden das jeweilige Profilblockelement 15 hin begrenzenden Schrägrillen 19 durch eine Profilblockelementflanke begrenzt, welche jeweils die zum Profilblockelement 15 hin weisende Rillenwand der Schrägrille 19 bildet. Die in Umfangsrichtung U in der Umfangsorientierungsrichtung D dem jeweiligen Profilblockelement 15 vorgeordnete Profilblockelementflanke ist in Fig. 1 als Flanke 23 bezeichnet.

Die Profilblockelemente 12 sind in axialer Richtung A zur Umfangsrille 4 hin jeweils durch eine Profilblockelementflanke begrenzt, welche die zum Profilblockelement 12 hin weisende Rillenwand der Umfangsrille 4 bildet. Die Profilblockelemente 12 sind in axialer Richtung A zur Umfangsrille 5 hin jeweils durch eine Profilblockelementflanke begrenzt, welche jeweils die zum Profilblockelement 12 hin weisende Rillenwand der Umfangsrille 5 bildet. Die Profilblockelemente 13 sind in axialer Richtung A zur Umfangsrille 5 hin jeweils durch eine Profilblockelementflanke begrenzt, welche die zum Profilblockelement 13 hin weisende Rillenwand der Umfangsrille 5 bildet. Die Profilblockelemente 13 sind in axialer Richtung A zur Umfangsrille 3 hin jeweils durch eine Profilblockelementflanke begrenzt, welche jeweils die zu dem Profilblockelement 13 hin weisende Rillenwand der Umfangsrille 3 bildet. Die Profilblockelemente 14 sind in axialer Richtung A zur Umfangsrille 3 hin jeweils durch eine Profilblockelementflanke begrenzt, welche jeweils die zum Profilblockelement 14 weisende Rillenwand der Umfangsrille 3 bildet. Die Profilblockelemente 14 sind in axialer Richtung A zur Umfangsrille 6 hin jeweils durch eine Profilblockelementflanke begrenzt, welche jeweils die zum Profilblockelement 14 hinweisende Rillenwand der Umfangsrille 6 bildet. Die Profilblockelemente 15 sind in axialer Richtung A zur Umfangsrille 6 hin jeweils durch eine Profilblockelementflanke begrenzt, welche jeweils die zum Profilblockelement 15 hin weisende Rillenwand der Umfangsrille 6 bildet. Die Profilblockelemente 15 sind in axialer Richtung A zur Umfangsrille 7 hin jeweils durch eine Profilblockelementflanke begrenzt, welche jeweils die zum jeweiligen Profilblockelement 15 hin weisende Rillenwand der Umfangsrille 7 bildet.

Die Profilblockelementflanken der Profilblockelemente 12,13,14 und 15 erstrecken sich jeweils in radialer Richtung R ausgehend vom Rillengrund 29 der jeweiligen Rille bis zu der radial äußeren Oberfläche 28 des zugeordneten Profilblockelementes 12,13,14 bzw. 15.

An der Einmündung der Schrägrillen 16 der Profilblockelementreihe 8 in die Umfangsrille 5 ist die Flanke 20 jeweils geradlinig durch die Umfangsrille 5 hin durch verlängert und mündet jeweils auf ein Profilblockelement 13 der benachbarten Profilblockreihe 9. Die Flanke 20 bildet dabei die Flanke eines Steges 24. Der Steg 24 erstreckt sich geradlinig mit seiner Längserstreckung ausgehend vom Profilblockelement 12 unter dem Winkel α zur axialen Richtung A parallel zur Flanke 20 verlaufend durch die Umfangsrille 5 hindurch bis zu dem axial benachbarten Profilblockelement 13 der Profilblockreihe 9 und verbindet dieses Profilblockelement 13 der Profilblockreihe 9 mit dem Profilblockelement 12 der Profilblockreihe 8. Der Steg 24 schneidet die das Profilblockelement 13 begrenzende Rillenwand der Umfangsrille 5 in eine Umfangsposition zwischen den beiden das Profilblockelement 13 in Umfangsrichtung begrenzenden Schrägrillen 17 mit Abstand zu jeder dieser beiden Schrägrillen 17.

Ebenso ist jede Flanke 21 der Profilblockelemente 13 der Profilblockreihe 9 in axialer Richtung A zur zentralen Umfangsrille 3 hin durch die zentrale Umfangsrille 3 hindurch geradlinig bis zu der die Profilblockreihe 10 axial begrenzenden Rillenwand der Umfangsrille 3 hin verlängert und bildet jeweils die einem Steg 25 in Umfangsrichtung U in Orientierungsrichtung D gesehen vorgeordnete Flanke des Steges 25. Der Steg 25 erstreckt sich dabei geradlinig und parallel zur Flanke 21 vom Profilblockelement 13 der Profilblockreihe 9 bis zu dem axial benachbarten Profilblockelement 14 der Profilblockreihe 10 und bindet dabei das Profilblockelement 13 an das Profilblockelement 14 an. Der Steg 25 mündet dabei in die durch die Rillenwand der Umfangsrille 3 hin gebildete Profilblockelementflanke des Profilblockelementes 14 in einer Umfangsposition zwischen den das Profilblockelement 14 begrenzenden Schrägrillen 18 jeweils mit Abstand zu beiden Schrägrillen 18.

Ebenso ist jede Flanke 22 der Profilblockelemente 14 der Profilblockreihe 10 in axialer Richtung A zur zentralen Umfangsrille 3 hin durch die zentrale Umfangsrille 3 hindurch geradlinig bis zu der die Profilblockreihe 9 axial begrenzenden Rillenwand der Umfangsrille 3 hin verlängert und bildet jeweils die einem Steg 26 in Umfangsrichtung U in Orientierungsrichtung D gesehen vorgeordnete Flanke des Steges 26. Der Steg 26 erstreckt sich dabei geradlinig und parallel zur Flanke 22 vom Profilblockelement 14 der Profilblockreihe 10 bis zu dem axial benachbarten Profilblockelement 13 der Profilblockreihe 9 und bindet dabei das Profilblockelement 14 an das Profilblockelement 13 an. Der Steg 26 mündet dabei in die durch die Rillenwand der Umfangsrille 3 hin gebildete Profilblockelementflanke des Profilblockelementes 13 in einer Umfangsposition zwischen den das Profilblockelement 13 begrenzenden Schrägrillen 17 jeweils mit Abstand zu beiden Schrägrillen 17.

Längs der in Umfangsrichtung U gerichteten Erstreckung der Umfangsrille 3 sind hierdurch in alternierender Reihenfolge jeweils Stege 25 und 26 angeordnet.

Ebenso ist jede Flanke 23 der Profilblockelemente 15 der Profilblockreihe 11 in axialer Richtung A zur zentralen Umfangsrille 3 hin durch die Umfangsrille 6 hindurch geradlinig bis zu der die Profilblockreihe 10 axial begrenzenden Rillenwand der Umfangsrille 6 hin verlängert und bildet jeweils die einem Steg 27 in Umfangsrichtung U in Orientierungsrichtung D gesehen vorgeordnete Flanke des Steges 27. Der Steg 27 erstreckt sich dabei geradlinig und parallel zur Flanke 23 vom Profilblockelement 15 der Profilblockreihe 11 bis zu dem axial benachbarten Profilblockelement 14 der Profilblockreihe 10 und bindet dabei das Profilblockelement 15 an das Profilblockelement 14 an. Der Steg 27 mündet dabei in die durch die Rillenwand der Umfangsrille 6 hin gebildete Profilblockelementflanke des Profilblockelementes 14 in einer Umfangsposition zwischen den das Profilblockelement 14 begrenzenden Schrägrillen 18 jeweils mit Abstand zu beiden Schrägrillen 17.

Die Profilblockreihen 8, 9, 10 und 11 sind jeweils mit einer in axialer Richtung A gemessenen Breit B ausgebildet, welche in der radial äußeren Oberfläche 28 bemessen wird. Die Umfangsrillen 4, 5, 3, 6 und 7 sind jeweils mit einer in axialer Richtung A gemessenen Breite B₁ ausgebildet, welche jeweils in der radial äußeren Oberfläche 28 gemessen wird. Die Schrägrillen 16, 17, 18 und 19 sind mit einer Breite B₂ ausgebildet, welche jeweils senkrecht zur Haupterstreckungsrichtung der jeweiligen Schrägrille in der radial äußeren Oberfläche 28 bemessen wird.

Die Stege 24, 25, 26 und 27 sind jeweils längs ihrer Erstreckung durch die jeweils zugeordnete Umfangsrille 5, 3 bzw. 6 hindurch mit einer konstanten Breite b ausgebildet, welche jeweils in der radial äußeren Oberfläche 28 bemessen wird. Die Breite b der Stege 24 wird dabei senkrecht zur Haupterstreckungsrichtung des Steges 24 und somit zur Haupterstreckungsrichtung der Flanke 20 bemessen. Die Breite b der Stege 25 wird jeweils senkrecht zur Haupterstreckungsrichtung der Stege 25 und somit senkrecht zur Haupterstreckungsrichtung der Flanke 21 bemessen. Die Breite b der Stege 26 wird jeweils senkrecht zur Haupterstreckungsrichtung der Stege 26 und somit senkrecht zur Haupterstreckungsrichtung der Flanke 22 bemessen. Die Breite b der Stege 27 wird jeweils senkrecht zur Haupterstreckungsrichtung der Stege 27 und somit senkrecht zur Haupterstreckungsrichtung der Flanke 23 bemessen.

Die Breite b der Stege wird mit (1/5)B ≤b≤(1/2) B ausgebildet. Beispielsweise ist b mit b = (1/3)B ausgebildet.

Die Breite b ist mit 5 mm ≤ b ≤ 10 mm ausgebildet. Die Breite B der Profilblockreihen ist mit 15 mm ≤ B ≤ 17 mm ausgebildet.

Die Rillenbreite B₁ der Umfangsrillen 4,5,3,6 und 7 ist jeweils mit 5 mm ≤ B₁ ≤ 12 mm ausgebildet. Die Rillenbreite B₂ der Schrägrillen 16,17,18 und 19 ist jeweils mit 4 mm ≤ B₂ ≤ 6 mm ausgebildet. Dabei sind die Rillenbreiten B₁ und B₂ mit B₂ ≤ B₁ ausgebildet.

Der Neigungswinkel α ist mit 45° ≤ α ≤ 70° ausgebildet. Im dargestellten Ausführungsbeispiel ist α = 60° ausgebildet.

Figur 1 zeigt ein weiteres Ausführungsbeispiel, bei dem die Profilblockelemente 12 zusätzlich jeweils an der in Umfangsrichtung U hin der Flanke 20 gegenüberliegenden Flanke des Profilblockelementes 12 nach axial außen zum Schulterprofilband 1 hin durch die Umfangsrille 4 hindurch geradlinig verlängert sind und dabei ihrerseits ebenfalls die Flanke eines Steges bilden, welcher sich durch die Umfangsrille 4 hindurch erstreckt und das Profilblockelement 12 mit dem Schulterprofilband 1 verbindet. Die Flanke bildet dabei die diesen Steg in Orientierungsrichtung D gesehen nachgeordnete den Steg begrenzende Flanke des Steges. Ebenso sind die Profilblockelemente 15 zusätzlich jeweils an der in Umfangsrichtung U hin der Flanke 23 gegenüberliegenden Flanke des Profilblockelementes 15 nach axial außen zum Schulterprofilband 2 hin durch die Umfangsrille 7 hindurch geradlinig verlängert sind und dabei ihrerseits ebenfalls die Flanke eines Steges bilden, welcher sich durch die Umfangsrille 7 hindurch erstreckt und das Profilblockelement 15 mit dem Schulterprofilband 2 verbindet. Die Flanke bildet dabei die diesen Steg in Orientierungsrichtung D gesehen nachgeordnete den Steg begrenzende Flanke des Steges. Auch diese in den Umfangsrillen 4 und 7 ausgebildeten Stege sind mit einer konstanten Stegbreite b ausgebildet.

Wie in Figur 2 und 3 am Beispiel der Stege 27 dargestellt ist, erstrecken sich die Stege jeweils ausgehend vom Rillengrund 29 in radialer Richtung R nach außen über eine Höhe h bis zu der den Steg nach radial außen begrenzenden Oberfläche 28. Dabei ist die Steghöhe h mit (1/2) P_{T} ≤ h ≤ P_{T} ausgebildet, wobei P_{T} die in radialer Richtung R in der jeweiligen Umfangsrille 4,5,3,6 bzw.7 gemessene Profiltiefe bildet. Die Profiltiefe ist dabei der radialen Abstand vom Rillengrund 29 bis zu der radial äußeren Oberfläche 28 der zur jeweiligen Umfangsrille benachbarten Profilblockreihen. In Figur 2 und 3 ist ein Ausführungsbeispiel mit einer Steghöhe h mit h = P_{T} dargestellt.

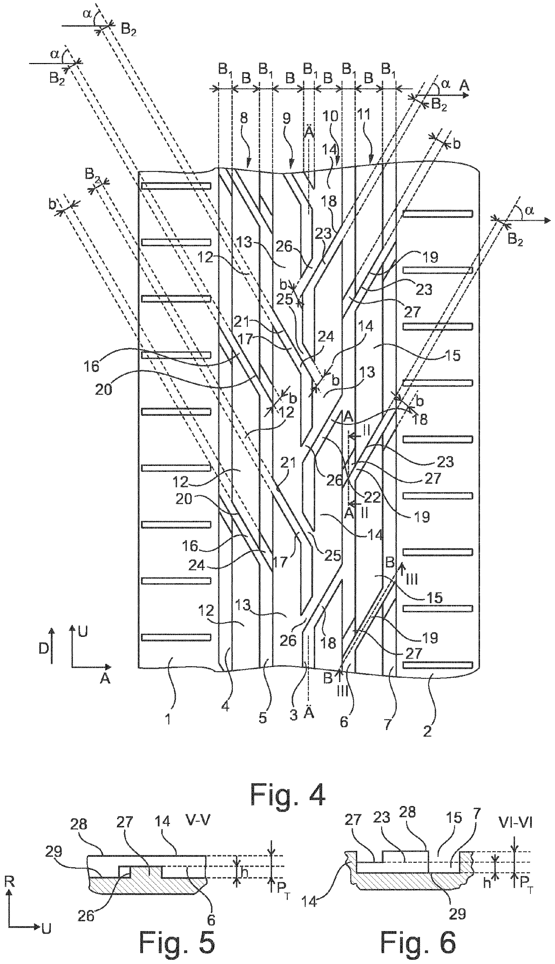

Die Figuren 4 bis 6 zeigen ein alternatives Ausführungsbeispiel mit h = 0,5 P_{T}.

### Bezugszeichenliste

### (Teil der Beschreibung)

- 1: Schulterprofilband
- 2: Schulterprofilband
- 3: Umfangsrille
- 4: Umfangsrille
- 5: Umfangsrille
- 6: Umfangsrille
- 7: Umfangsrille
- 8: Profilblockreihe
- 9: Profilblockreihe
- 10: Profilblockreihe
- 11: Profilblockreihe
- 12: Profilblockelement
- 13: Profilblockelement
- 14: Profilblockelement
- 15: Profilblockelement
- 16: Schrägrille
- 17: Schrägrille
- 18: Schrägrille
- 19: Schrägrille
- 20: Flanke
- 21: Flanke
- 22: Flanke
- 23: Flanke
- 24: Steg
- 25: Steg
- 26: Steg
- 27: Steg
- 28: Radial äußere Oberfläche
- 29: Rillengrund

## Patentansprüche

1. Laufstreifenprofil eines Fahrzeugluftreifens mit einer in axialer Richtung A zentral positionierten Umfangsrille (3) und mit beiderseits dieser Umfangsrille (3) jeweils wenigstens zwei in axialer Richtung A nebeneinander angeordneten und jeweils durch eine Umfangsrille (5,6) von einander beabstandeten Profilblockreihen (8,9,10,11), welche jeweils aus in Umfangsrichtung U des Fahrzeugreifens hintereinander angeordneten und durch Schrägrillen (16,17,18,19) von einander beabstandeten Profilblockelementen (12,13,14,15) getrennt sind, wobei jedes Profilblockelement (12,13,14,15) einer Profilblockreihe (8,9,10,11) in Umfangsrichtung U sowohl in die erste als auch in die zweite der beiden Umfangsorientierungen jeweils durch eine Flanke begrenzt wird, die jeweils die zum Profilblockelement (12,13,14,15) hin gerichtete Rillenwand der zur jeweiligen Umfangsorientierung das Profilblockelement (12,13,14,15) begrenzenden Schrägrille (16,17,18,19) bildet, wobei die Schrägrillen (16,17,18,19) jeweils in axialer Richtung A in beide die jeweilige Profilblockreihe (8,9,10,11) in axialer Richtung A begrenzenden Umfangsrillen (4,5,3,6,7) mündet und entlang ihrer axialen Erstreckung in der von der zentralen Umfangsrille (3) wegweisenden axialen Richtung A durch die Profilblockreihe (8,9,10,11) hinweg unter Einschluss eines Neigungswinkels α mit 80°>α > 10° zur axialen Richtung A in die erste und somit in die gleiche Umfangsorientierung geneigt verlaufend ausgebildet sind, wobei Profilblockelemente (12,13,14,15) der Prorilblockreihen (9,10) jeweils mit einem Steg (24,25,26,27) durch die Umfangsrille (5,3,6) hindurch (24,25,26,27) mit einem Profilblockelement (12,13,14,15) einer benachbarten Profilblockreihe (9,10) verbunden ausgebildet sind,
**dadurch gekennzeichnet,**
**dass** die die Profilblockelemente (12,13,14,15) der Profilblockreihen (8,9,10,11) in Umfangsrichtung U jeweils mit ihrer einen, in gleicher Orientierung hin begrenzenden Flanke (20,21,22,23) in axialer Richtung A zur zentralen Umfangsrille (3) hin durch die die jeweilige Profilblockreihe (8,9,10,11) begrenzende Umfangsrille (5,3,6) hindurch bis zur benachbarten Profilblockreihe (9,10) erstreckt als eine Flanke (20,21,22,23) eines das Profilblockelement (12,13,14,15) mit einem Profilblockelement (12,13,14,15) der benachbarten Profilblockreihe (9,10) durch die Umfangsrille (5,3,6) hindurch verbindenden Steges (24,25,26,27) ausgebildet ist, wobei dieser Steg (24,25,26,27) das Profilblockelement (13,14) der benachbarten Profilblockreihe (9,10) jeweils mit einem in Umfangsrichtung U gemessenen Abstand zu den dieses Profilblockelement (13,14) der benachbarten Profilblockreihe (9,10) begrenzenden Schrägrillen (17,18) anbindet.

2. Laufstreifenprofil gemäß den Merkmalen von Anspruch 1,
wobei die die Profilblockelemente (12,13,14,15) der Profilblockreihen (8,9,10,11) in Umfangsrichtung U jeweils mit ihrer zur zweiten Umfangsorientierung gerichteten Seite hin begrenzenden Flanke (20,21,22,23) in axialer Richtung A zur zentralen Umfangsille (3) hin durch die die jeweilige Profilblockreihe (8,9,10,11) begrenzende Umfangsrille (5,3,6) hindurch bis zur benachbarten Profilblockreihe (9,10) erstreckt als eine Flanke (20,21,22,23) eines das Profilblockelement (12,13,14,15) mit einem Profilblockelement (13,14) der benachbarten Profilblockreihe (9,10) durch die Umfangsrille (5,3,6) hindurch verbindenden Steges (24,25,26,27) ausgebildet ist.

3. Laufstreifenprofil gemäß den Merkmalen von Anspruch 1 oder 2,
wobei die das Profilblockelement (12,13,14,15) und den Steg (24,25,26,27) begrenzende Flanke (20,21,22,23) über ihre gesamte axiale Erstreckung in der radial äußeren Oberfläche geradlinig ausgebildet ist.

4. Laufstreifenprofil gemäß den Merkmalen von einem oder mehreren der vorangegangenen Ansprüche,
wobei die senkrecht zur Erstreckungsrichtung der Flanke (20,21,22,23) durch die Umfangsrille (5,3,6) hindurch gemessene maximale Breite b des Steges (24,25,26,27) in der den Steg (24,25,26,27) nach radial außen begrenzenden Oberfläche mit (1/5)B ≤b ≤(1/2) B ausgebildet ist, wobei B die in axialer Richtung A des Reifens gemessene maximale Breite der Profilblockreihe (8,9,10,11) in der radial äußeren Oberfläche bildet.

5. Laufstreifenprofil gemäß den Merkmalen von einem oder mehreren der vorangegangenen Ansprüche,
wobei die senkrecht zur Erstreckungsrichtung der Flanke (20,21,22,23) durch die Umfangsrille (5,3,6) hindurch gemessene maximale Breite b des Steges (24,25,26,27) in der den Steg (24,25,26,27) nach radial außen begrenzenden Oberfläche mit 5mm ≤b≤10mm ausgebildet ist.

6. Laufstreifenprofil gemäß den Merkmalen von einem oder mehreren der vorangegangenen Ansprüche,
wobei der Steg (24,25,26,27) mit einer in radialer Richtung R ausgehend von dem die Umfangsrille (5,3,6) nach radial innen begrenzenden Rillengrund (29) nach außen gemessenen Höhe h mit (1/2)P_{T}≤h≤P_{T} ausgebildet ist, wobei P_{T} die in radialer Richtung R in der Umfangsrille (5,3,6) gemessene Profiltiefe bildet.

7. Laufstreifenprofil gemäß den Merkmalen von einem oder mehreren der vorangegangenen Ansprüche,
wobei der Neigungswinkels α mit 45°≤α≤70° - insbesondere mit α =60° - ausgebildet ist.

8. Laufstreifenprofil gemäß den Merkmalen von einem oder mehreren der vorangegangenen Ansprüche,
wobei die Breite B₂ der Schrägrille (16,17,18,19) längs ihrer Erstreckung in der radial äußeren Oberfläche jeweils mit B₂≤ B₁ ausgebildet ist, wobei B₁ die Breite der Umfangsrille (5,3,6) längs ihrer Erstreckung in Umfangsrichtung U in der radial äußeren Oberfläche bildet, in welche die Schrägrille (16,17,18,19) in axialer Richtung A zur zentralen Umfangsrille (5,3,6) hin mündet.

9. Laufstreifenprofil gemäß den Merkmalen von einem oder mehreren der vorangegangenen Ansprüche,
wobei die Breite B₁ der Umfangsrille (5,3,6) längs ihrer Erstreckung in Umfangsrichtung in der radial äußeren Oberfläche jeweils mit 5mm ≤ B₁≤12mm ausgebildet ist.

10. Laufstreifenprofil gemäß den Merkmalen von einem oder mehreren der vorangegangenen Ansprüche,
wobei die Breite B₂ der Schrägrille (16,17,18,19) längs ihrer Erstreckung in der radial äußeren Oberfläche jeweils mit 4mm≤B₂≤6mm ausgebildet ist.

## Claims

1. Tread profile of a pneumatic vehicle tyre with a circumferential groove (3), positioned centrally in the axial direction A, and with at least two rows of profile blocks (8, 9, 10, 11), which are arranged next to one another in the axial direction A on each of both sides of this circumferential groove (3), respectively spaced apart from one another by a circumferential groove (5, 6) and in each case separated by comprising profile block elements (12, 13, 14, 15) that are arranged one behind the other in the circumferential direction U of the vehicle tyre and are spaced apart from one another by oblique grooves (16, 17, 18, 19), wherein each profile block element (12, 13, 14, 15) of a row of profile blocks (8, 9, 10, 11) is bounded in the circumferential direction U both in the first and in the second of the two circumferential orientations respectively by a flank, which respectively forms the groove wall directed towards the profile block element (12, 13, 14, 15) of the oblique groove (16, 17, 18, 19) bounding the profile block element (12, 13, 14, 15) in relation to the respective circumferential orientation, wherein the oblique grooves (16, 17, 18, 19) respectively opens out in the axial direction A into both circumferential grooves (4, 5, 3, 6, 7) bounding the respective row of profile blocks (8, 9, 10, 11) in the axial direction A and are formed as running along their axial extent in the axial direction A away from the central circumferential groove (3) through the row of profile blocks (8, 9, 10, 11) inclined in the first, and consequently the same circumferential orientation with the formation of an angle of inclination α where 80° > α > 10° to the axial direction A, wherein profile block elements (12, 13, 14, 15) of the rows of profile blocks (9, 10) are respectively formed as connected by a web (24, 25, 26, 27) through the circumferential groove (5, 3, 6) (24, 25, 26, 27) to a profile block element (12, 13, 14, 15) of an adjacent row of profile blocks (9, 10),
**characterized**
**in that** the flank (20, 21, 22, 23) bounding the profile block elements (12, 13, 14, 15) of the rows of profile blocks (8, 9, 10, 11) in the circumferential direction U respectively with its one, in the same orientation, made to extend in the axial direction A in relation to the central circumferential groove (3) through the circumferential groove (5, 3, 6), bounding the respective row of profile blocks (8, 9, 10, 11), up to the adjacent row of profile blocks (9, 10), is formed as a flank (20, 21, 22, 23) of a web (24, 25, 26, 27) connecting the profile block element (12, 13, 14, 15) to a profile block element (12, 13, 14, 15) of the adjacent row of profile blocks (9, 10) through the circumferential groove (5, 3, 6), wherein this web (24, 25, 26, 27) attaches the profile block element (13, 14) of the adjacent row of profile blocks (9, 10) respectively at a distance, measured in the circumferential direction U, from the oblique grooves (17, 18) bounding this profile block element (13, 14) of the adjacent row of profile blocks (9, 10).

2. Tread profile according to the features of Claim 1, wherein the flank (20, 21, 22, 23) bounding the profile block elements (12, 13, 14, 15) of the rows of profile blocks (8, 9, 10, 11) in the circumferential direction U respectively with its side directed towards the second circumferential orientation, made to extend in the axial direction A in relation to the central circumferential groove (3) through the circumferential groove (5, 3, 6), bounding the respective row of profile blocks (8, 9, 10, 11), up to the adjacent row of profile blocks (9, 10), is formed as a flank (20, 21, 22, 23) of a web (24, 25, 26, 27) connecting the profile block element (12, 13, 14, 15) to a profile block element (13, 14) of the adjacent row of profile blocks (9, 10) through the circumferential groove (5, 3, 6).

3. Tread profile according to the features of Claim 1 or 2,
wherein the flank (20, 21, 22, 23) bounding the profile block element (12, 13, 14, 15) and the web (24, 25, 26, 27) is formed linearly over its entire axial extent in the radially outer surface.

4. Tread profile according to the features of one or more of the preceding claims,
wherein the maximum width b, measured perpendicularly to the direction of extent of the flank (20, 21, 22, 23) through the circumferential groove (5, 3, 6), of the web (24, 25, 26, 27) in the surface bounding the web (24, 25, 26, 27) radially outwards is formed with (1/5)B ≤ b ≤ (1/2)B, where B forms the maximum width, measured in the axial direction A of the tyre, of the row of profile blocks (8, 9, 10, 11) in the radially outer surface.

5. Tread profile according to the features of one or more of the preceding claims,
wherein the maximum width b, measured perpendicularly to the direction of extent of the flank (20, 21, 22, 23) through the circumferential groove (5, 3, 6), of the web (24, 25, 26, 27) in the surface bounding the web (24, 25, 26, 27) radially outwards is formed with 5 mm ≤ b ≤ 10 mm.

6. Tread profile according to the features of one or more of the preceding claims,
wherein the web (24, 25, 26, 27) is formed with a height h, measured in the radial direction R outwards from the groove base (29) that radially inwardly bounds the circumferential groove (5, 3, 6), with (1/2)P_{T} ≤ h ≤ P_{T}, where P_{T} forms the profile depth, measured in the radial direction R, in the circumferential groove (5, 3, 6).

7. Tread profile according to the features of one or more of the preceding claims,
wherein the angle of inclination α is formed with 45° ≤ α ≤ 70° - in particular with α = 60°.

8. Tread profile according to features of one or more of the preceding claims,
wherein the width B₂ of the oblique groove (16, 17, 18, 19) along its extent in the radially outer surface is formed respectively with B₂ ≤ B₁, where B₁ forms the width of the circumferential groove (5, 3, 6) along its extent in the circumferential direction U in the radially outer surface into which the oblique groove (16, 17, 18, 19) opens out in the axial direction A in relation to the central circumferential groove (5, 3, 6).

9. Tread profile according to the features of one or more of the preceding claims,
wherein the width B₁ of the circumferential groove (5, 3, 6) along its extent in the circumferential direction in the radially outer surface is respectively formed with 5 mm ≤ B₁ ≤ 12 mm.

10. Tread profile according to the features of one or more of the preceding claims,
wherein the width B₂ of the oblique groove (16, 17, 18, 19) along its extent in the radially outer surface is respectively formed with 4 mm ≤ B₂ ≤ 6 mm.

## Revendications

1. Profil de bande de roulement pour bandage pneumatique pour roue de véhicule, présentant une rainure périphérique (3) disposée au centre dans la direction axiale A et, de chaque côté de cette rainure périphérique (3), au moins deux rangées (8, 9, 10, 11) de blocs profilés disposées l'une à côté de l'autre dans la direction axiale A et séparées l'une de l'autre par une rainure périphérique (5, 6),
les rangées étant formées d'éléments (12, 13, 14, 15) de bloc profilé disposés les uns derrière les autres dans la direction périphérique du bandage de roue de véhicule et étant séparés les uns des autres par des rainures obliques (16, 17, 18, 19),
chaque élément (12, 13, 14, 15) de bloc profilé d'une rangée (8, 9, 10, 11) de blocs profilés étant délimité tant dans la première que dans la deuxième orientation périphérique par un flanc qui forme la paroi, orientée vers l'élément (12, 13, 14, 15) de bloc profilé, de la rainure oblique (16, 17, 18, 19) qui délimite l'élément (12, 13, 14, 15) de bloc profilé dans l'orientation périphérique concernée,
les rainures obliques (16, 17, 18, 19) débouchant dans la direction axiale A dans les deux rainures périphériques (4, 5, 6, 7) qui délimitent la rangée (8, 9, 10, 11) de blocs profilés concernée dans la direction axiale A et s'étendant de façon inclinée dans la première et donc la même orientation périphérique en formant un angle d'inclinaison α, 80° > α > 10°, par rapport à la direction axiale A, le long de son extension axiale dans la direction axiale A non orientée vers la rainure périphérique centrale (3) en s'éloignant de la rangée (8, 9, 10, 11) de blocs profilés,
chacun des éléments (12, 13, 14, 15) de bloc profilé de la rangée (9, 10) de blocs profilés étant relié par une nervure (24, 25, 26, 27) qui traverse la rainure périphérique (5, 3, 6) (24, 25, 26, 27) à un élément (12, 13, 14, 15) de bloc profilé d'une rangée (9, 10) voisine de blocs profilés,
**caractérisé en ce que**
le flanc (20, 21, 22, 23) qui délimite chacun des éléments (12, 13, 14, 15) de bloc profilé d'une rangée (8, 9, 10, 11) de blocs profilés dans la direction périphérique U respectivement avec son un, dans la même orientation dans la direction axiale A en direction de la rainure périphérique centrale (3), et qui s'étend en traversant la rainure périphérique (5, 3, 6) qui délimite la rangée concernée (8, 9, 10, 11) de blocs profilés jusqu'à la rangée voisine (9, 10) de blocs profilés, est configuré comme flanc (20, 21, 22, 23) d'une nervure (24, 25, 26, 27) qui relie l'élément (12, 13, 14, 15) de bloc profilé à un élément (12, 13, 14, 15) de bloc profilé de la rangée voisine (9, 10) de blocs profilés à travers la rainure périphérique (5, 3, 6),
cette nervure (24, 25, 26, 27) reliant l'élément (13, 14) de blocs profilés de la rangée voisine (9, 10) de blocs profilés à une distance, mesurée dans la direction périphérique U, par rapport aux rainures obliques (17, 18) qui délimitent cet élément (13, 14) de blocs profilés de la rangée voisine (9, 10) de blocs profilés.

2. Profil de bande de roulement selon les caractéristiques de la revendication 1, dans lequel le flanc (20, 21, 22, 23) qui délimite chacun des éléments (12, 13, 14, 15) de bloc profilé d'une rangée (8, 9, 10, 11) de blocs profilés dans la direction périphérique U du côté tourné vers la deuxième orientation dans la direction axiale A en direction de la rainure périphérique centrale (3) et qui s'étend en traversant la rainure périphérique (5, 3, 6) qui délimite la rangée concernée (8, 9, 10, 11) de blocs profilés jusqu'à la rangée voisine (9, 10) de blocs profilés, est configuré comme flanc (20, 21, 22, 23) d'une nervure (24, 25, 26, 27) qui relie l'élément (12, 13, 14, 15) de bloc profilé à un élément (12, 13, 14, 15) de bloc profilé de la rangée voisine (9, 10) de blocs profilés à travers la rainure périphérique (5, 3, 6).

3. Profil de bande de roulement selon les caractéristiques des revendications 1 ou 2, dans lequel le flanc (20, 21, 22, 23) qui délimite l'élément (12, 13, 14, 15) de bloc profilé et la nervure (24, 25, 26, 27) est rectiligne sur toute son extension axiale dans la surface radialement extérieure.

4. Profil de bande de roulement selon les caractéristiques d'une ou plusieurs des revendications précédentes, dans lequel la largeur maximale b de la nervure (24, 25, 26, 27), mesurée perpendiculairement à la direction de l'extension du flanc (20, 21, 22, 23) à travers la rainure périphérique (5, 3, 6) présente dans la surface qui délimite radialement vers l'extérieur la nervure (24, 25, 26, 27) vérifie la relation (1/5)B ≤ b ≤ (1/2)B, B étant la largeur maximale, mesurée dans la direction axiale A du bandage de roue dans la surface radialement extérieure de la rangée (8, 9, 10, 11) de blocs profilés.

5. Profil de bande de roulement selon les caractéristiques d'une ou plusieurs des revendications précédentes, dans lequel la largeur maximale b de la nervure (24, 25, 26, 27), mesurée dans la surface qui délimite radialement à l'extérieur la nervure (24, 25, 26, 27), vérifie la relation 5 mm ≤ b ≤ 10 mm.

6. Profil de bande de roulement selon les caractéristiques d'une ou plusieurs des revendications précédentes, dans lequel la nervure (24, 25, 26, 27) présente une hauteur h, mesurée dans la direction radiale R en partant du fond (29) de la rainure qui délimite radialement vers l'intérieur la rainure périphérique (5, 3, 6) avec (1/2)P_{T} ≤ h ≤ P_{T}, P_{T} étant la profondeur du profilé de la rainure périphérique (5, 3, 6) mesurée dans la direction radiale R.

7. Profil de bande de roulement selon les caractéristiques d'une ou plusieurs des revendications précédentes, dans lequel l'angle d'inclinaison α vérifie la relation 45° ≤ α ≤ 70° et en particulier α = 60°.

8. Profil de bande de roulement selon les caractéristiques d'une ou plusieurs des revendications précédentes, dans lequel la largeur B₂ de la rainure oblique (16, 17, 18, 19) vérifie dans son extension dans la surface radialement extérieure la relation B2 ≤ B₁, B₁ étant la largeur de la rainure périphérique (5, 3, 6) dans son extension dans la direction périphérique U dans la surface radialement extérieure dans laquelle la rainure oblique (16, 17, 18, 19) débouche dans la direction axiale A dans la rainure périphérique centrale (5, 3, 6).

9. Profil de bande de roulement selon les caractéristiques d'une ou plusieurs des revendications précédentes, dans lequel la largeur B₁ de la rainure périphérique (5, 3, 6) dans son extension dans la direction périphérique dans la surface radialement extérieure vérifie la relation 5 mm ≤ B₁ ≤ 12 mm.

10. Profil de bande de roulement selon les caractéristiques d'une ou plusieurs des revendications précédentes, dans lequel la largeur B₂ de la rainure oblique (16, 17, 18, 19) dans son extension dans la direction périphérique dans la surface radialement extérieure vérifie la relation 4 mm ≤ B₂ ≤ 6 mm.
